# EUROPEAN PATENT APPLICATION

(11) **EP 2 833 685 A1**
(43) Date of publication of application: **04.02.2015**
(21) Application number: 13306090.5
(22) Date of filing: 29.07.2013
(51) Int. Cl.: H04W 64/00, H04W 84/12, H04W 88/08

(54) **Determining the location of a network access point using inertial sensors**

(71) Applicant: ALCATEL LUCENT, 92100 Boulogne-Billancourt (FR)
(72) Inventor: Vanderhulst, Geert, 2018 ANTWERP (BE)
(74) Representative: Raets, David

(57) **Abstract**

A network access point (1), comprising network access hardware (10) having a processor (12)adapted for providing wireless network access, and a location positioning hardware (14; 16) operable to determine, at least once, an absolute position location, and to monitor relative movements therefrom in such as way as to maintain absolute localization information. The location positioning hardware comprises: a satellite positioning hardware (14) operable to have accurate absolute positioning and an inertial movement unit (16) operable to sense relative movement and update absolute positioning information. The inertial movement unit comprises one or more of the following hardware: accelerometers, gyroscopes and magnetometers.

## Description

### TECHNICAL FIELD

The present invention relates to the field of network access points, and in particular network access points with localization capabilities.

### BACKGROUND

This section introduces aspects that may be helpful in facilitating a better understanding of the invention. Accordingly, the statements of this section are to be read in this light and are not to be understood as admissions about what is in the prior art or what is not in the prior art.

Knowing the precise location of wireless ("WiFi") access points ("AP"s) is vital for WiFi-based positioning methods which are more and more utilized to detect the location of a user's mobile device in both indoor and outdoor metropolitan environments. However, before positioning can work, the location of APs need to be determined.

Whilst the locations of such APs can be sensed through "wardriving" or crowd-sourced "warwalking", a problem remains in that when an AP is added, moved or removed, it can take a while before these changes are discovered. Besides, an AP might be temporarily switched off to save power or avoid radiation whilst people are sleeping which perturbs current approaches.

Wardriving involves building a database of WiFi AP locations using vehicles equipped with GPS and WiFi chips to locate WiFi APs. This method of collecting WiFi signal data by driving around has been adopted by the likes of Google®, Skyhook Wireless®, and Intel Place Lab®, and others.

Similarly, warwalking is claimed to be more accurate as sidewalks are closer to buildings from where the WiFi signals originate and walking is slower than driving such that more signal samples can be collected. This approach is typically crowdsourced (e.g. by the likes of Apple® and Navizon®), whereby a community of users collects information about WiFi APs. However, these solutions suffer from other problems including: i) unpredictable location accuracy and ii) prone to changes in the physical location of the AP rapidly outdating location data.

In particular, to maintain an accurate database of WiFi AP locations, one will constantly need to reassess areas to update a catalog of hotspots.

Skyhook® also provides users with the option to submit location coordinates for their WiFi AP, assisted by an interactive map. Clearly, this solution depends on the initiative of individual users and the provided location accuracy is also unpredictable.

A solution is sought to better address this situation, allowing for more accurate WiFi AP positioning determination.

### SUMMARY

In view of the foregoing, an embodiment herein provides a network access point, comprising network access hardware having a processor adapted for providing wireless network access, and a location positioning hardware operable to determine, at least once, an absolute position location, and to monitor relative movements therefrom in such as way as to maintain absolute localization information.

Also, disclosed herein is a process for network access point localization, including a first step of getting an absolute position location, and a second step of monitoring relative movements thereafter to update the location information and maintain absolute localization information.

In summary, we propose to turn WiFi APs into interactive nodes capable of determining their own location, and maintaining good localization in time.

Furthermore, one or more of these embodiments as defined by the appended claims have notably the following advantages for the involved parties:
- For the Network Provider (for example the Internet Service Provider installing and/or owning the WiFi APs), such solutions enable location-based computing. With presence-aware WiFi APs, one is able to optimize network infrastructure for tracking these devices and manage network capacities more accurately.
- For the end-user, he or she experiences greater indoor and outdoor positioning results.
- For the community, accurate databases of WiFi AP positions allows the freeing up of resources currently used in wardriving and (crowd-sourced) warwalking initiatives.

Furthermore, some of all of the precited embodiments are key enablers of many different services for third parties.

For example, in emergencies, they allow to pass accurate locations to emergency operators, for example WiFi-enabled mobile phones transmitting accurate location data inferred from the Wifi AP to the emergency services.

Indoor navigation is also greatly advantaged when numerous accurate WiFi signals are able to be sensed, enabling accurate indoor navigation solutions, for example to find one's way to a meeting room inside a building.

Similarly, highly accurate indoor advertising techniques may leverage accurate WiFi data in order to determine a client's location and thus push product-specific messages to a user's mobile phone.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:
FIG. 1 illustrates a schematic illustration of a network access point according to a first embodiment;
FIG. 2 illustrates an exemplary process for operating a network access point according to an embodiment;
FIG. 3 illustrates a schematic illustration of a network access point according to a second embodiment.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

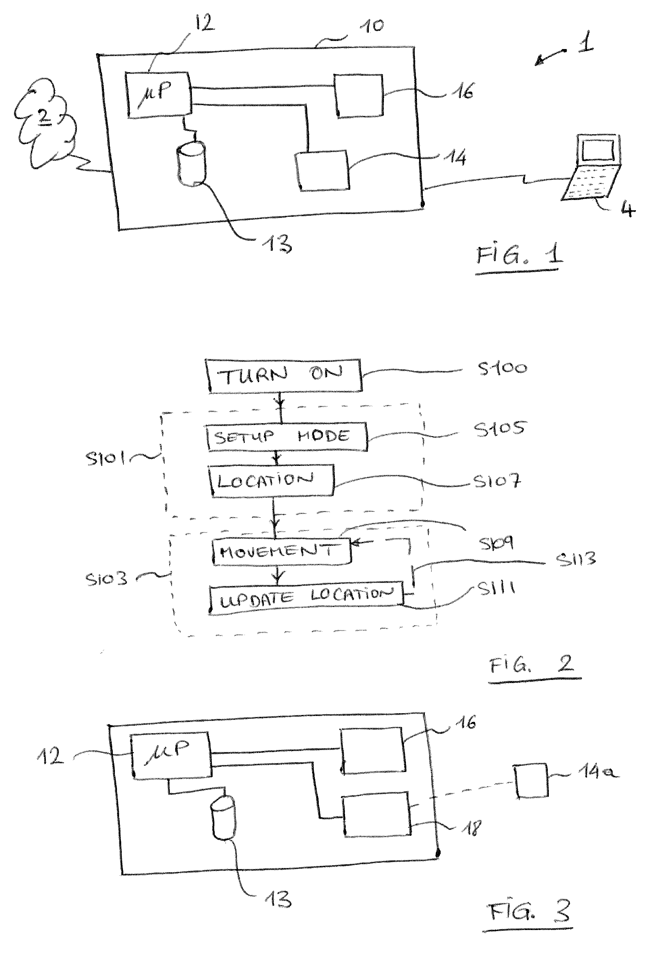

Figure 1 is a schematic illustration of a system 1 according to a first embodiment adapted to act as an intermediate point for providing network access from a network backbone 2 to a final consumer or end user 4, typically for providing internet access from an internet backbone to a residential or small business customer. Such a system 10 is typically referred to as an access point, and may be thought of as bridges between the wireless world and the wired world. They provide users with wireless radio access, typically to the internet or a local network.

As the present examples will make clear, the present embodiments are specifically referring to the WLAN standard (IEEE 802.11), although other technologies and devices utilizing other technologies are not excluded from the scope of the present teachings.

The access point 10 may be owned by the end-user, or leased by the end-user to the internet access provider, or other third parties such as location mapping companies.

The access point 10 comprises a processor 12 for controlling overall operations of the access point 10.

The access point 10 further comprises a storage device 13 adapted for storing local settings of the access points, such as access credentials, location settings, historical data, etc.

The access point 10 further comprises a positioning device 14 adapted to accurately determine its location in absolute terms. For example, the positioning device 14 may be a global positioning system (GPS) or Global Navigation Satellite System (GLONASS) or similar. For example, the positioning device 14 may be a high precision dual-frequency GPS device. As such, the positioning device 14 is adapted to determine position with a high degree of accuracy and transmit this location to the storage device 13 via the processor 12. It is to be noted that some of the positioning devices 14 may need a clear view of the sky in order to derive an accurate position.

In other embodiments, the positioning device 14 may be a device to very accurately triangulate the position of the access point 10 from other radio beacons, such as specialty indoor location beacons, WiFi signals with accurate location information, or yet others.

The access point 10 further comprises an inertial movement unit 16 adapted to determine relative location movements using inertial technology. More particularly, the inertial movement unit 16 is able to detect all movement of the access point 10 and deduce a relative movement in three-dimensions. An inertial movement unit 16 may for example include one or more of the following sensors accelerometers, gyroscopes and magnetometers. All relative movement changes are transmitted to the processor 12 to compute corrected absolute location settings, and update the previous location settings in the storage device 13.

As such, the processor 12 is adapted to make use of both the positioning device 14 and the inertial movement unit 16 to determine a very accurate position of the access point 10 at all times.

For example, the access point 10 can first be positioned in such a way as to receive an accurate location position via the positioning device 14, and is then moved to the final operating location inside a locker, on a shelf, etc. The final location will be able to be very accurately determined from the incremental positioning changes via the inertial movement unit 16. For example, the access point 10 can be first positioned with a view to the sky to pick up clean GPS information, then moved indoors to a final operating location.

For example, also looking at figure 2, the processor 12 is operable in at least two modes:
- A setup mode (S100), in which general settings, including location settings, may be set;
- A functioning mode (S103), for day to day operation, in which the access point 10 provides a point of access to the internet network, and automatically updates its location changes

The access point may for example be operable as follows. The access point 10 is first powered on (S100), at which point is enters the setup mode (S101) in which all settings are loaded and the access point is brought to a state of normal operation (S105). Concurrently or subsequently, the access point then enters a state of retrieving a location lock (S107) in which the processor 12 prompts the positioning device 14 for location information, which is then stored in the storage device 13.

Preferably, step S107 is executed outdoors underneath a clear sky to avoid multipath errors, but techniques to reduce multipath errors may also be used.

It is to be noted that the location lock step (S107) may be made, in other variants, to be compulsory or optional in the setup mode S101.

For example, in other variants, the location lock step (S107) may be entered at any moment by the end-user at a time of his choosing.

During the normal mode of operation (S103), the access point 10 may be moved (S109) around, for example to place it in a final operating location after the location data has been taken. It can also be moved during routine use of the device. In any case, the inertial movement unit 16 permanently monitors the movement changes and updates the location settings in the storage unit 13 accordingly (S111).

Step S113 illustrates a permanent loop indicating the constant update of the position via the inertial movement unit 16.

The combination of these techniques results in an accurate position. Furthermore, since the inertial tracking is only used for a few meters, the errors caused by sensor drift that is typical for this positioning approach will be minimal.

In another embodiment illustrated at figure 3, the access point 10 further comprises a Near Field Communication device 18 (commonly referred to as NFC) or similar adapted for communication in close proximity to the access point 10, typically less than 10cm.

The NFC device 14 is adapted in particular for communicating with an external positioning device 14a, which is similar in function to the built-in positioning device 14 of figure 1.

In a variant, the NFC device 14 automatically enters location lock step (S107) once it senses communication with a positioning device 14a which has a valid position information.

This embodiment is particularly advantageous since the absolute location of the access point 10 needs only be done periodically, since all incremental movements after an initial setup (step S107) are taken into account by the inertial movement device 16.

Thus, as is made clear from the foregoing, accuracy is achieved in two steps:
1. A first step of obtaining very precise location, eg from a GPS satellite receiver, which may be internal or external to the access point 10.
2. As soon as the access point 10 is aware of its absolute location, which may or may not be outside the building, a second step of tracking via the inertial navigation unit 16 is used to track the last few meters towards the final location of the AP inside the house, i.e. the relative location from the point where the absolute GPS location was uploaded.

Of course, there can be other embodiments.

For example, the NFC device 14 and/or the inertial movement unit 16 may be connected to a battery to perdure the location information, and to allow position tracking even when the access point 10 is disconnected from a mains electricity supply.

Also, the setup mode S101 and in particular the step of acquiring an exact location lock (S107) can be performed by the end-user or by specialized third parties, locally or remotely, for example with appropriate sophisticated equipment not available to the general public. This may for example be installed by a professional-installer having a specialized location device 14a uploading the precise location via the NFC device 18.

According to yet other variants, the location information available in the storage device 13 may be automatically uploaded to networked location servers, for example connected to the internet, collating accurate positioning information for all compatible access points 10. This is particularly useful information to distribute to third parties for accurate urban localization using WiFi-enabled mobile devices, for example using triangulation techniques.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A network access point (1), comprising:
- network access hardware (10) having a processor (12)adapted for providing wireless network access,
- a location positioning hardware (14; 16) operable to determine, at least once, an absolute position location, and to monitor relative movements therefrom in such as way as to maintain absolute localization information.

2. A network access point according to claim 1, in which the location positioning hardware comprises:
- a satellite positioning hardware (14) operable to have accurate absolute positioning ;
- an inertial movement unit (16) operable to sense relative movement and update absolute positioning information

3. A network access point according to claim 1, in which the location positioning hardware comprises:
- short range communication device (18) operable to communicate with a remote satellite positioning hardware operable to have accurate absolute positioning;
- an inertial movement unit operable to sense relative movement and update absolute positioning information

4. A network access point according to any one of claims 2 or 3, in which the inertial movement unit comprises one or more of the following hardware:
accelerometers, gyroscopes and magnetometers.

5. A network access point according to any one of the preceding claims, further adapted to update a remote storage base with its own localization information.

6. A process for network access point localization, including a first step of getting an absolute position location, and a second step of monitoring relative movements thereafter to update the location information and maintain absolute localization information.

7. A process for network access point localization according to claim 6, wherein step of monitoring relative movements makes of inertial movement tracking techniques.

8. A process for network access point localization according to any one of claims 6 or 7, further comprising a step of periodically sending said localization information to a remote storage base to maintain accurate information on the localization of said network access point.
